# EUROPÄISCHE PATENTANMELDUNG

(11) **EP 2 608 389 A1**
(43) Veröffentlichungstag der Anmeldung: **26.06.2013**
(21) Anmeldenummer: 11194182.9
(22) Anmeldetag: 19.12.2011
(51) Int. Cl.: H02M 7/49

(54) **Modularer mehrstufiger Wechselrichter mit einer Vielzahl seriell geschalteter Wechselrichtermodule und zentraler Entladeschaltung**

(71) Anmelder: Siemens Aktiengesellschaft, 80333 München (DE)
(72) Erfinder: Völkel, Stefan, 91058 Erlangen (DE)

(57) **Zusammenfassung**

Die Erfindung betrifft eine Stromrichterschaltung (4), wenigstens zwei Submodule (22) in Reihenschaltung, die über eine Induktivität elektrische Leistung aus einer eine Gleichspannung (16) abgebenden Leistungsquelle (8) bezieht, umfasst. Dabei weist jedes Submodul (22) eingangsseitig eine einphasige Halbbrücke (40) und lastseitig eine einphasige Vollbrücke (42) auf. Zudem sind die Halbbrücke (40), die Vollbrücke (42) und ein Zwischenkreiskondensator (44) gleichspannungsmäßig parallel geschaltet. Die Stromrichterschaltung (4) umfasst zudem eine Entladeschaltung (62) zum Entladen der Zwischenkreiskondensatoren (44) der Submodule (22), die parallel zu den in Reihe geschalteten Submodulen und der Induktivität geschaltet ist.

## Beschreibung

Die Erfindung betrifft eine Stromrichterschaltung gemäß dem Oberbegriff des Anspruchs 1, ein Verfahren zum Entladen eines Zwischenkreiskondensators in einem Submodul der Stromrichterschaltung, eine Steuervorrichtung zur Durchführung des Verfahrens und einen Elektromotor mit der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in der Stromrichterschaltung der eingangs genannten Art die Zwischenkreiskondensatoren der Submodule über eine gemeinsame Entladeschaltung zu entladen.

Die Erfindung geht von der Überlegung aus, dass der Zwischenkreiskondensator in jedem Submodul selektiv über eine eigene Entladeschaltung erfolgen könnte.

Der Erfindung liegt jedoch die Erkenntnis zugrunde, dass ein derart hoher Schaltungsaufwand zum selektiven Entladen der Zwischenkreiskondensatoren überflüssig ist. Die eingangsseitig geschaltete Halbbrücke jedes Submoduls erlaubt es, das betreffende Submodul eingangsseitig kurzzuschließen und aus der Reihenschaltung der einzelnen Submodule zu entfernen. Auf diese Weise können gezielt die Submodule in der Reihenschaltung verbleiben, dessen Zwischenkreiskondensatoren entladen werden sollen, so dass eine selektive Auswahl einzelner Submodule zur Entladung ihrer Zwischenkreiskondensatoren möglich ist. Nach der Entladung kann das entsprechende Submodul durch seine Halbbrücke eingangsseitig kurzgeschlossen und so dauerhaft aus der Reihenschaltung entfernt werden, ohne dass die verbleibenden Submodule in der Stromrichterschaltung ihren Betrieb einstellen müssten. Damit kann ein elektrischer Leistungsfluss durch die Stromrichterschaltung auch nach der Entladung des Zwischenkreiskondensators beispielsweise eines fehlerhaften Submoduls in reduziertem Umfang aufrechterhalten werden.

Die Erfindung gibt daher eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke auf. Zudem sind die Halbbrücke und die Vollbrücke gleichspannungsseitig sowie parallel hierzu ein Zwischenkreiskondensator geschaltet. Erfindungsgemäß umfasst die angegebene Stromrichterschaltung eine Entladeschaltung zum Entladen der Kondensatoren der Submodule, die parallel zu der Reihenschaltung geschaltet ist.

Die Vollbrücke ist aus zwei Einzelhalbbrücken aufgebaut, wobei die Eingangshalbbrücke und die Einzelhabbrücken der Vollbrücke jeweils eine Reihenschaltung aus zwei Brückenarmen aufweisen. Diese drei Reihenschaltungen sind im Submodul zueinander parallel verschaltet. Dabei wird an einem der beiden Brückenarme der Eingangshalbbrücke die umzuwandelnde Teilspannung der Gleichspannung angelegt und zwischen einem Brückenzweig der Vollbrücke die auszugebende Wechselspannung abgegriffen. Die Vollbrücke kann auch mehrphasig sein und eine entsprechende Anzahl an Einzelhalbbrücken aufweisen, die alle gleichspannungsseitig parallel geschaltet sind.

In dem angegebenen Umrichter lassen sich alle Kondensatoren über eine einzige Entladeschaltung entladen, so dass der angegebene Umrichter kosten-, gewichts- und platzsparend aufgebaut werden kann. Durch die selektive Entlademöglichkeit können die einzelnen Zwischenkreiskondensatoren der Submodule mit minimalen Belastungen entladen werden, da nicht alle Submodule gemeinsam eine Entladeenergie an die Entladeschaltung abgeben müssen, sondern jedes Submodul nacheinander entladen werden kann.

In einer Weiterbildung der Erfindung umfasst die Halbbrücke jedes Submoduls eine am Submodul eingangsseitig parallel geschaltete Diode, die in Richtung der Gleichspannung aus der elektrischen Leistungsquelle sperrt. Diese Diode sorgt automatisch dafür, dass ein Strom aus der elektrischen Leistungsquelle durch das entsprechende Submodul geführt, ein Entladestrom aus einem Zwischenkreiskondensator eines anderen Submoduls jedoch automatisch am Submodul vorbeigeführt wird.

In einer zusätzlichen Weiterbildung umfasst die Halbbrücke jedes Submoduls einen steuerbaren Schalter, der in Reihe zwischen der Diode und der Vollbrücke geschaltet ist. Durch die den steuerbaren Schalter kann der Zwischenkreiskondensator des Submoduls mit dem steuerbaren Schalter in den Entladestromkreis mit der Entladeschaltung gelegt werden.

In einer noch anderen Weiterbildung der Erfindung umfasst die Entladeschaltung ein Entladeschaltelement, das zum Kurzschließen der Reihenschaltung der Submodule über die Entladeschaltung vorgesehen ist. Der Kurzschluss kann dabei optional über die Induktivität erfolgen, die einen zu hohen Stromanstieg bei der Entladung vermeidet. Über dieses Entladeschaltelement lässt sich die Entladung steuern. Das Entladeschaltelement kann selbstgesteuert, wie im Falle einer Diode oder fremdgesteuert, wie im Falle eines Transistors sein. Während ein selbstgesteuertes Entladeschaltelement unmittelbar auf die Entladung auslösende Ereignisse wie einen Fehler reagiert, können fremdgesteuerte Entladeschaltelemente, wie Transistoren vielseitiger eingesetzt werden.

In einer anderen Weiterbildung umfasst die Entladeschaltung eine in Reihe zum Entladeschalter geschaltete Kurzschlusslast. Über die Kurzschlusslast kann die im Kondensator gespeicherte elektrische Energie aufgenommen und aus dem angegebenen Umrichter abgeführt werden. Die Kurzschlusslast kann beispielsweise induktiv sein, die zum Beginn des Entladevorgangs gegenüber einem Stromanstieg einen hohen Widerstand aufweist. Ein durch die Parallelschaltung mit dem Zwischenkreiskondensator entstehendes Schwingen des Entladestromes könnte mit einer Rückschwingdiode unterbunden werden.

Besonders bevorzugt ist die Kurzschlusslast rein ohmsch. Durch eine rein ohmsche Kurzschlusslast kann nicht nur auf weitere Schaltungselemente verzichtet was sich mindernd auf den Bauraum und die Kosten der Entladeschaltung auswirkt, eine Entladung eines Zwischenkreiskondensators über eine rein ohmsche Last verläuft auch vergleichsweise schnell, da die im Zwischenkreiskondensator gespeicherte elektrische Energie an der ohmschen Last direkt in Wärme umgewandelt wird.

In einer besonderen Weiterbildung der Erfindung ist der Entladeschalter geeignet ist zu schließen, wenn eine am Zwischenkreiskondensator abfallende Spannung von einem vorgegeben Spannungsbereich abweicht. Durch die am Zwischenkreiskondensator abfallende Spannung lässt sich auf direkte Weise erkennen, ob der Leistungsfluss zwischen Eingang und Ausgang eines Submoduls beispielsweise durch einen Fehler gestört ist. Ist die Spannung am Zwischenkreiskondensator zu hoch, könnte dies an einer Unterbrechung im Submodul oder in einer an das Submodul angeschlossenen elektrischen Last, wie der Motorwicklung, liegen, so dass zu wenig in das Submodul eingespeiste Leistung an die elektrische Last abgegeben wird. Daher muss ein großer Teil der entsprechenden Energie im Zwischenkreiskondensator gespeichert werden, was zu der entsprechend hohen Spannung führt. Eine zu niedrige Spannung am Zwischenkreiskondensator könnte ein Hinweis auf einen Kurzschluss sein. Durch den vorgegeben Spannungsbereich für die Spannung am Zwischenkreiskondensator ist damit ein Kriterium zum unmittelbaren Überwachen der Submodule auf Fehler hin geschaffen, auf die durch das Entladen des Zwischenkreiskondensators rasch reagiert werden kann.

In einer bevorzugten Weiterbildung der Erfindung ist der Entladeschalter geeignet ist zu schließen, wenn eine am Entladeschalter abfallende Spannung eine Überspannungsschwelle erreicht hat. Diese Überspannungsschwelle kann beispielsweise durch die charakteristischen Eigenschaften einer break over diode als Entladeschalter vorgegeben werden, wobei die break over diode automatisch schließt, wenn die an der break over diode abfallende Spannung die Überspannungsschwelle überschritten hat.

In einer besonders bevorzugten Weiterbildung der Erfindung umfasst die eingangsseitige einphasige Halbbrücke einen eingangsseitig parallel geschalteten ersten Halbbrückenschalter und einen zweiten Halbbrückenschalter, der in Reihe zwischen dem ersten Halbbrückenschalter und dem Zwischenkreiskondensator geschaltet ist. Durch den ersten Schalter kann das entsprechende Submodul eingangsseitig überbrückt werden so dass die elektrische Leistung aus der elektrischen Leistungsquelle am Submodul vorbeigeführt wird. Der zweite Schalter unterbricht einen Stromkreis durch das entsprechende Submodul und verhindert einen Reststrom durch das entsprechende Submodul. Ferner wird durch die Anordnung des ersten und zweiten Schalters ein Hochsetzsteller in Verbindung mit der Induktivität der Stromrichterschaltung umgesetzt.

Die Erfindung gibt auch ein Verfahren zum selektiven Entladen eines Zwischenkreiskondensators in einem bestimmten Submodul einer angegebenen Stromrichterschaltung an. Das angegebene Verfahren umfasst die Schritte Anlegen des Zwischenkreiskondensators des bestimmten Submoduls an einen Eingang des bestimmten Submoduls über die Halbbrücke des bestimmten Submoduls, Kurzschließen der Eingänge der verbleibenden Submodule der Stromrichterschaltung über die jeweiligen Halbbrücken der Submodule und Entladen des Zwischenkreiskondensators des bestimmten Submoduls mit der Entladeschaltung bis eine am Zwischenkreiskondensator des bestimmten Submoduls abfallende Spannung eine bestimmte Entladespannungsschwelle unterschritten hat. Die vorbestimmte Entladespannungsschwelle kann jeden beliebigen Wert annehmen, der ausreicht, um den Kondensator in einen sicherheitsunkritischen Zustand zu überführen. Dies ist applikationsabhängig. So könnte die vorbestimmte Schwellspannung beispielsweise Null betragen. Sie kann aber auch auf einen Wert über Null festgelegt werden, wenn beispielsweise eine Restspannung im Kondensator sicherheitstechnisch unbedenklich sein sollte. Das Anlegen des Zwischenkreiskondensators sowie das eingangsseitige Kurzschließen des entsprechenden Submoduls können wahlweise auch automatisch beispielsweise über eine Diode erfolgen.

In einer Weiterbildung der Erfindung umfasst das angegebene Verfahren Erfassen einer Fehlfunktion im modularen Umrichter und Unterbrechen einer elektrischen Leistungszufuhr zum modularen Umrichter nachdem die Fehlfunktion im modularen Umrichter erfasst ist. Auf diese Weise kann der gesamte modulare Umrichter in einen sicheren Zustand überführt werden. Ist die elektrische Last beispielsweise als Motorwicklung Teil eines Elektromotors eines Fahrzeuges, so kann beispielsweise im Falle eines Unfalls mit dem Fahrzeug vermieden werden, dass sich ein Unfallopfer oder andere Personen am aufgeladenen Zwischenkreiskondensator verletzen.

In einer Weiterbildung der Erfindung umfasst das angegebene Verfahren Erfassen einer Fehlfunktion in der Stromrichterschaltung und Unterbrechen einer elektrischen Leistungszufuhr, insbesondere aus einer eine Gleichspannung abgebenden Gleichspannungsquelle, zur Stromrichterschaltung nachdem die Fehlfunktion in der Stromrichterschaltung erfasst ist. Auf diese Weise kann die gesamte Stromrichterschaltung in einen sicheren Zustand überführt werden. Ist die elektrische Last beispielsweise als Motorwicklung Teil eines Elektromotors eines Fahrzeuges, so kann beispielsweise im Falle eines Unfalls mit dem Fahrzeug vermieden werden, dass sich ein Unfallopfer oder andere Personen am aufgeladenen Zwischenkreiskondensator verletzen.

In einer anderen Weiterbildung der Erfindung umfasst das angegebene Verfahren Erfassen, ob ein das Submodul umgebenes Gehäuse und/oder ein die Stromrichterschaltung umgebenes Gehäuse geöffnet ist und Abschalten einer Versorgungsspannung der Stromrichterschaltung nachdem Erfassen. Auf diese Weise können Schäden vermieden werden, die im Falle eines beabsichtigten oder unbeabsichtigten Öffnens des Gehäuses und eines unbeabsichtigten Berührens des Submodulschaltkreises durch Personen oder andere technische Elemente entstehen können.

In einer noch anderen Weiterbildung der Erfindung umfasst das angegebene Verfahren die Schritte Erfassen einer Fehlfunktion im Submodul und Abschalten der Eingangsspannung des Submoduls, nachdem die Fehlfunktion im Submodul erfasst ist. Die Abschaltung des Submoduls selbst kann dabei wieder durch eine Abschaltung der Versorgungsspannung der gesamten Stromrichterschaltung erfolgen, so dass auch automatisch die Eingangsspannung am Submodul abgeschaltet ist. Eine alternative Ausführung der Abschaltung der Eingangsspannung des Submoduls ist Gegenstand der Unteransprüche.

In einer bevorzugten Weiterbildung der Erfindung umfasst das angegebene Verfahren Erfassen der Fehlfunktion im Submodul, wenn die Spannung am Zwischenkreiskondensator eine Überspannungsschwelle überschreitet. Die Überspannungsschwelle kann so gewählt sein, dass sie mit einem bestimmten Toleranzbereich über der gewöhnlichen Betriebsspannung des Zwischenkreiskondensators liegt. Diese Überspannungsschwelle bietet ein Kriterium um sicherheitskritische Störungen im Submodul zu erkennen, die ein Abschalten des Submoduls notwendig lassen werden können.

In einer besonders bevorzugten Weiterbildung der Erfindung umfasst das angegebene Verfahren Überbrücken des Submoduls aus der Stromrichterschaltung zum Abschalten der Eingangsspannung des Submoduls. Das heißt, dass das Submodul der Stromrichterschaltung aus einem Leistungskreis der Stromrichterschaltung herausgenommen wird, ohne dass andere Submodule von dieser Unterbrechung der Leistungszufuhr zum betroffenen Submodul beeinträchtigt werden. Auf diese Weise lässt sich das Submodul lokal schützen, ein elektrischer Verbraucher, der an die einzelnen Submodule angeschlossene elektrische Lasten umfasst, kann jedoch in einer Art Notprogramm weiterhin betrieben werden.

In einer alternativen Weiterbildung der Erfindung umfasst das angegebene Verfahren Regeln eines Stromes durch die Entladeschaltung mit dem Schalter als Stellglied. Auf diese Weise lässt sich auf einfache Weise der Entladestrom sicher begrenzen.

In einer bevorzugten Weiterbildung der Erfindung umfasst die Regelung eine Zweipunktregelung mit eingebauter Hysterese, die ein Schwingen des Stromes durch den Zweig des Schalters vermeidet.

Die Erfindung gibt auch eine Steuervorrichtung zur Durchführung des angegebenen Verfahrens an.

In einer Weiterbildung der Erfindung weist die Steuervorrichtung einen Speicher und einen Prozessor auf. Dabei ist das Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die Erfindung gibt auch einen Elektromotor für ein Fahrzeug an, der mehrere Motorwicklungen und eine angegebene Stromrichterschaltung mit einer der Anzahl der Motorwicklungen entsprechenden Anzahl an Submodulen umfasst, wobei jedes Submodul ausgangsseitig an eine Motorwicklung angeschlossen ist. In einem Fahrzeugantrieb ist die vorliegende Erfindung besonders günstig, da es auch nach Ausfall eines Submoduls gegebenenfalls unter Einschränkungen möglich ist, das Fahrzeug mit dem Fahrzeugantrieb weiterzubewegen.

Nachfolgend werden Ausführungsbeispiele der Erfindung anhand einer Zeichnung näher erläutert. Darin zeigen:
- FIG 1: eine Schaltung mit einem angegebenen modularen Umrichter in einem ersten Entladeschaltzustand,
- FIG 2: eine Schaltung mit einem angegebenen modularen Umrichter in einem zweiten Entladeschaltzustand, und
- FIG 3: eine Schaltung mit einem angegebenen modularen Umrichter in einem dritten Entladeschaltzustand.

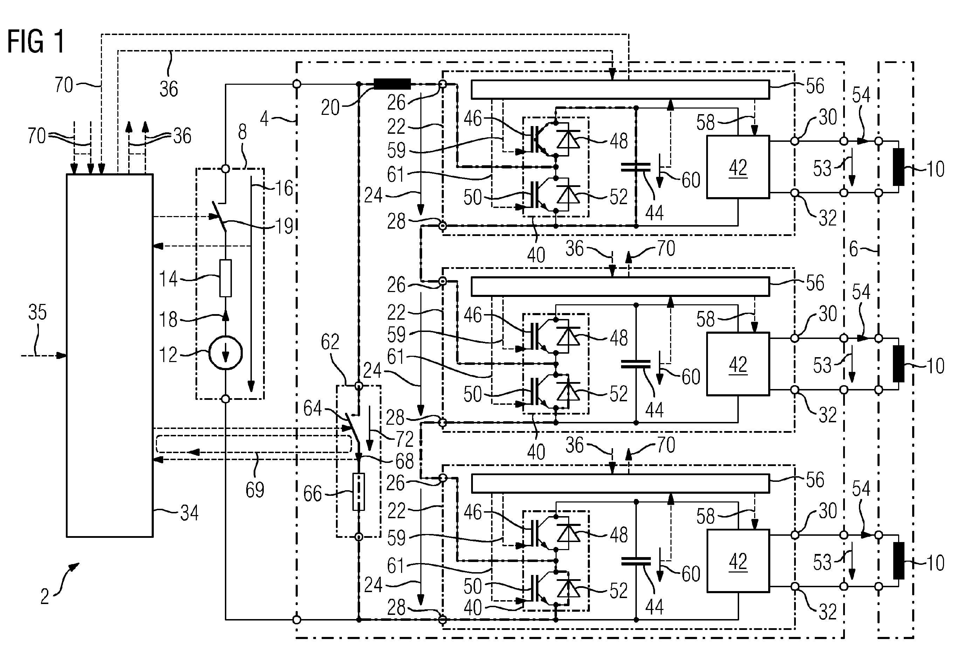

Es wird auf FIG 1 Bezug genommen, die eine Schaltung 2 mit einer angegebenen Stromrichterschaltung 4 in einem ersten Entladeschaltzustand zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist sechs elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab. Die Batterie 8 kann über einen Batterieschalter 19 von der Stromrichterschaltung 4 abgeklemmt werden.

Die Stromrichterschaltung 4 weist eingangsseitig eine Induktivität 20 auf, die beispielsweise eine Spule sein kann. Die Induktivität 20 kann aber auch durch die Verbindungsleitung zur Batterie 8 realisiert werden. An diese Induktivität 20 schließt sich in Reihe eine Reihenschaltung aus mehreren noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung sechs gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die elektrischen Lasten 10 angeschlossen.

Die Schaltung 2 besitzt ferner ein übergeordnetes Steuergerät, nachstehend Master 34 genannt, das die Erzeugung des Drehfeldes mit den als Motorwicklungen ausgebildeten elektrischen Lasten 10 des als Elektromotor ausgebildeten elektrischen Verbrauchers 6 steuert. Dazu kann der Master 34 eine Drehzahl 35 des als Elektromotor ausgebildeten elektrischen Verbrauchers 6 empfangen und basierend auf Stellsignalen 36 die einzelnen Submodule 22 ansteuern. Basierend auf den Stellsignalen 36 stellen die einzelnen Submodule 22 einen elektrischen Strom 54 durch die als Motorwicklungen ausgebildeten elektrischen Lasten 10 ein, um das Drehfeld zu erzeugen.

Der Master 34 ist ferner vorgesehen, die Batteriespannung 16 zu erfassen. Anhand der Batteriespannung 16 überprüft der Master 34 die Schaltung 2 auf Fehler hin. Ist die Batteriespannung 16 beispielsweise zu gering, ist dies ein Anzeichen für einen Kurzschluss. Im Fehlerfalle überführt der Master 34 die Schaltung 2 in einen sicheren Zustand, indem er den Batterieschalter 19 öffnet, der beispielsweise intern in der Batterie 8 angeordnet sein kann.

Jedes Submodul 22 weist eine Eingangshalbbrücke 40, eine Vollbrücke 42 und einen Zwischenkreiskondensator 44 auf, die alle miteinander parallel verschaltet sind.

Die Eingangshalbbrücke 40 weist einen ersten Schalter 46 und eine dazu parallel geschaltete erste Freilaufdiode 48 sowie einen dazu in Reihe geschalteten zweiten Schalter 50 und eine dazu parallel geschaltete zweite Freilaufdiode 52 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 48, 52 auch weggelassen werden. Während die erste Freilaufdiode 48 mit ihrer Durchlassrichtung in Richtung des Batteriestroms 18 geschaltet ist, ist die zweite Freilaufdiode 52 mit ihrer Durchlassrichtung entgegen dem Batteriestrom 18 geschalten.

Die erste Teilspannung 24 ist an den zweiten Schalter 50 angelegt, während der erste Schalter 46 in Reihe zwischen dem zweiten Schalter 50 und der Vollbrücke 42 geschaltet ist. Somit kann der zweite Schalter 50 aus Sicht der Vollbrücke 42 den Eingang aus der Batterie 8 kurzschließen, während der erste Schalter 46 (bei geöffneten zweiten Schalter 50) die Vollbrücke 50 in den Strompfad der Batterie 8 legen kann. Werden in jedem Submodul 22 die Schalter 46, 50 in gleicher Weise abwechselnd geöffnet und geschlossen, ist gemeinsam mit der Induktivität 20 ein Hochsetzsteller geschaffen, der die Summe der Teilspannungen 24 höher setzt, als die Batteriespannung 16. Weiterhin kann durch die Eingangshalbbrücke 40 die Vollbrücke 42 auch dauerhaft aus der Reihenschaltung der drei Submodule 22 entfernt werden, wenn der zweite Schalter 50 dauerhaft geschlossen bleibt.

Die Vollbrücke 42 ist zum Wechselrichten der am Eingang 26, 28 des Submoduls 22 abfallenden Teilspannung 24, in eine Wechselspannung 53 am Ausgang 30, 32 des Submoduls 22 vorgesehen. Entsprechend wird an die elektrische Last 10 ein Wechselstrom 54 abgegeben.

Zur Ansteuerung der Vollbrücke 42 ist in jedem Submodul 22 ein lokales Steuergerät, nachstehend Slave 56 genannt, vorgesehen. Der Slave 56 empfängt vom Master 34 über eine nicht gezeigte sichere elektrische Trennung das Stellsignal 36. Die vollständige Verbindung zwischen Master 34 und Slave 56 ist nur für das erste Submodul 22 dargestellt. Basierend auf dem Stellsignal 36 gibt der Slave 56 ein oder mehrere Stellsignale 58 an die Vollbrücke 42 aus, die basierend auf den Stellsignalen 58 die Wechselspannung 53 und den Wechselstromes 54 einstellt.

Der Slave 54 kann ferner anhand einer am Zwischenkreiskondensator 44 abfallenden Spannung 60 einen Fehler im Submodul 22 erfassen. Der Zwischenkreiskondensator 44 ist zur Zwischenspeicherung von elektrischer Energie aus der elektrischen Last 10 aufgrund eines Blindleistungsflusses vorgesehen, die das Submodul 22 aufgrund der vorgegebenen Richtung des Batteriestromes 18 und der Batteriespannung 16 nicht verlassen kann. Der Blindleistungsfluss ist jedoch begrenzt, so dass auch die Spannung 60 am Zwischenkreiskondensator 44 begrenzt ist. Überschreitet diese einen bestimmten Wert, so ist dies ein Hinweis auf einen fehlerhaften elektrischen Energiefluss durch das Submodul 22, da der Zwischenkreiskondensator 44 nun nicht mehr ausschließlich elektrische Energie aus dem Blindleistungsfluss sondern auch aus einem Wirkleistungsfluss speichert, was darauf hindeutet, dass eventuell eine Unterbrechung im Submodul 22 vorliegen könnte. Unterschreitet die Spannung 60 am Zwischenkreiskondensator 44 hingegen einen weiteren kleineren vorbestimmten Wert, so ist dies ein Hinweis auf einen Kurzschluss zum Zwischenkreiskondensator 44. In beiden Fällen kann der Slave 56 mit einem ersten Halbbrückenansteuersignal 59 den ersten Schalter 56 öffnen und mit einem zweiten Halbbrückenansteuersignal 61 den zweiten Schalter 50 dauerhaft schließen, so den Eingang 26, 28 des Submoduls 22 kurzschließen und das Submodul 22 so aus dem Leistungskreis der Stromrichterschaltung 4 entfernen, ohne, dass die restlichen Submodule 22 davon betroffen wären.

Die Induktivität 20 und die einzelnen Submodule 22 sind zueinander in Reihe geschalten. Parallel zu dieser Reihenschaltung ist in der Stromrichterschaltung 4 eine Entladeschaltung 62 geschalten. Die Entladeschaltung 62 weist einen Entladeschalter 64 und einen Entladewiderstand 66 auf, der in Reihe zum Entladeschalter 64 geschlossen ist.

Zum Entladen des Zwischenkreiskondensators 44 eines Submoduls 22 schließt der Slave 56 den ersten Halbbrückenschalter 46 und öffnet den zweiten Halbbrückenschalter 50. Gleichzeitig trennt der Master 34 über den Batterieschalter 19 die Batterie 8 vom modularen Umrichter 4 und schließt über ein Entladesignal den Entladeschalter 64. In FIG 1 ist der Entladevorgang für das erste der gezeigten Submodule 22 dargestellt. Der entsprechende Zwischenkreiskondensator 44 des ersten Submoduls 22 wird zu einer Leistungsquelle und gibt einen Entladestrom 68 ab, der dem zuvor geflossenen Batteriestrom 18 entgegengesetzt ist. In FIG 1 ist der sich ergebende Entladestrom 68 in einer fett gepunkteten Linie dargestellt.

Da die zweiten Freilaufdioden 52 an den einzelnen Submodulen 22 mit ihrer Durchlassrichtung entgegen dem Batteriestrom 18 geschalten sind, sind sie somit für den Entladestrom 68 durchlässig und schließen die einzelnen Submodule 22 eingangsseitig kurz. Das erste Submodul 22, dessen Zwischenkreiskondensator 44 entladen wird, ist zwar ebenfalls kurzgeschlossen, dieser Kurzschluss ist jedoch wirkungslos, da der Stromkreis des Entladestroms 68 geschlossen werden muss, sodass der Entladestrom 68 nicht durch die zweite Freilaufdiode 52 sondern zurück zum Zwischenkreiskondensator 44 fließt.

Um zu hohe Stromspitzen zu vermeiden, kann ein Entladestrom 68 durch den Entladeschalter 64 mit einem Regelkreis 69 auch geregelt werden, indem dieser immer dann durch den Entladeschalter 64 ausgeschaltet wird, wenn er einen bestimmten Wert überschreitet und wieder eingeschaltet wird, wenn er einen zweiten, kleineren Wert unterschreitet. Diese Form der Stromregelung wird auch als Zweipunktregelung mit Hysterese bezeichnet und ist besonders preisgünstig technisch umsetzbar. Durch die Stromregelung kann auch auf den Entladewiderstand 66 verzichtet werden.

Der Slave 56 kann das Auftreten des Fehlers in Form der zu hohen oder zu niedrigen Spannung 60 am Zwischenkreiskondensator 44 im Submodul 22 über eine Nachricht 70 an den Master 34 melden, damit dieser gegebenenfalls weitere Schutzmaßnahmen einleiten kann. Ist der als Elektromotor ausgeführte elektrische Verbraucher 6 beispielsweise zum Antrieb eines Fahrzeugs vorgesehen, so kann der Master 34 im Falle des Fehlers in einem Submodul 22 und dem damit verbundenen Ausfall einer als Motorwicklung ausgeführten Last 10 den Fahrzeugbetrieb in einem Notprogramm fortsetzen. Dabei wird das Fahrzeug mit einer vergleichsweise geringen Höchstgeschwindigkeit bis zur nächsten Werkstatt fortbewegt, so dass die verbleibenden als Motorwicklung ausgeführten Lasten 10 nicht ebenfalls aufgrund einer Überbelastung ausfallen.

In einer alternativen Weiterbildung kann der Schalter 64 auch als Vierschichtdiode ausgeführt sein, der schließt, wenn eine Schalterspannung 72 einen vorbestimmten Wert erreicht oder überschreitet. Auf diese Weise könnte auf eine Überspannung am Zwischenkreiskondensator 44 sofort reagiert werden.

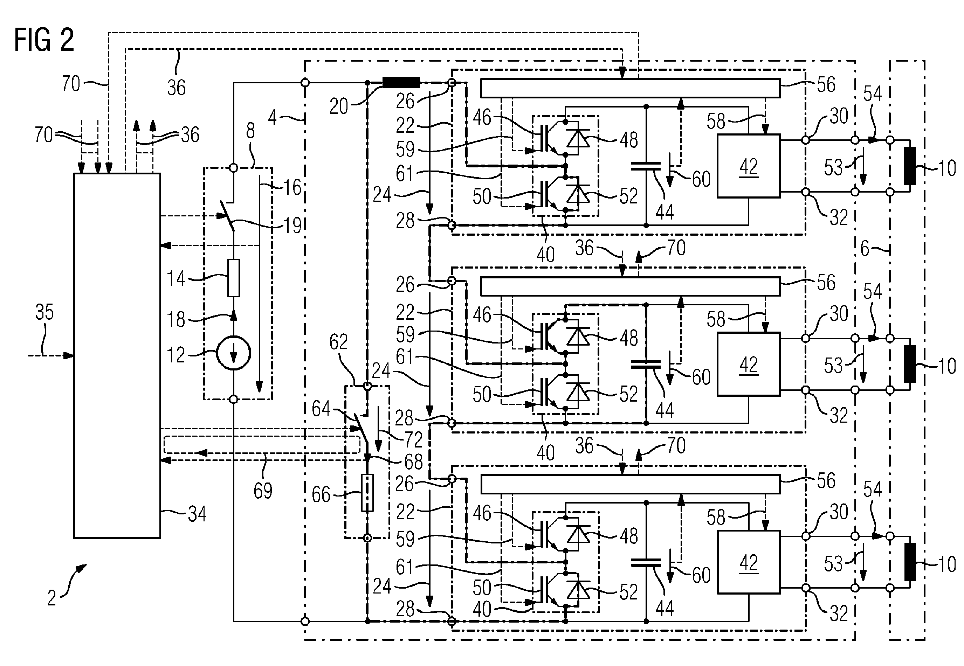

Es wird auf FIG 2 Bezug genommen, die eine Schaltung mit einem angegebenen modularen Umrichter in einem zweiten Entladeschaltzustand zeigt. In FIG 2 werden zu FIG 1 gleiche Elemente mit gleichen Bezugszeichen versehen und nicht noch einmal beschrieben.

In FIG 2 ist die selektive Entladung des zweiten Submoduls gezeigt. Das heißt, dass in FIG 2 der erste Halbbrückenschalter 46 des zweiten Submoduls geschlossen ist, während die ersten Halbbrückenschalter 46 der restlichen Submodule 22 geöffnet sind. Damit ergibt der in FIG 2 gezeigte Verlauf des Entladestroms 68, wobei nur der Kondensator 44 im zweiten Submodul entladen wird.

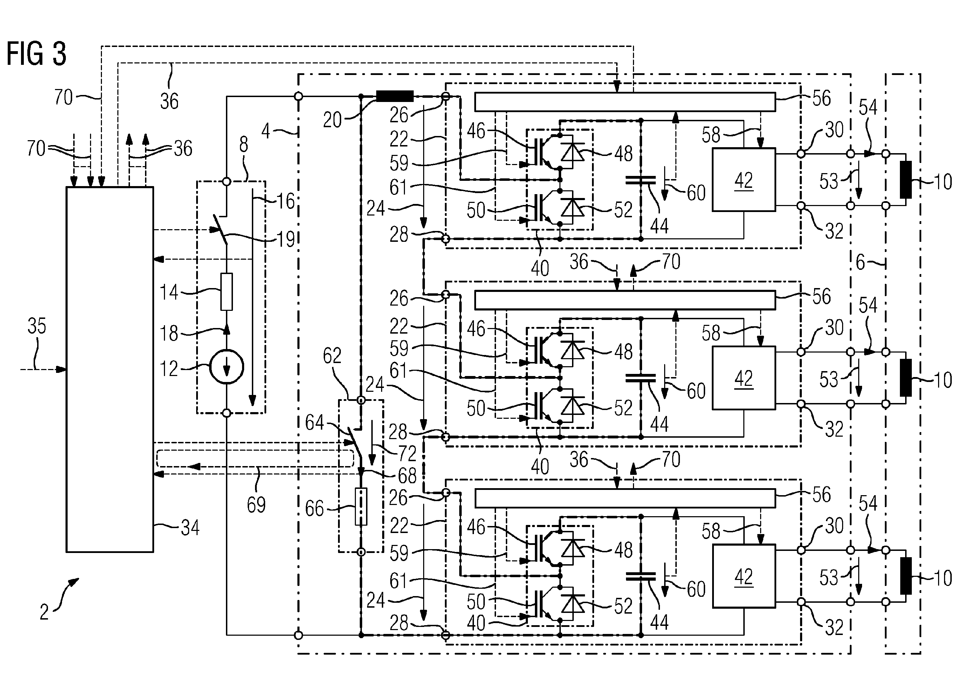

Es wird auf FIG 3 Bezug genommen, die eine Schaltung mit einem angegebenen modularen Umrichter in einem dritten Entladeschaltzustand zeigt. In FIG 3 werden zu FIG 1 und 2 gleiche Elemente mit gleichen Bezugszeichen versehen und nicht noch einmal beschrieben.

In FIG 3 ist die Entladung aller Submodule 22 gezeigt. Das heißt, dass in FIG 3 die ersten Halbbrückenschalter 46 aller Submodule 22 geschlossen sind. Damit ergibt der in FIG 3 gezeigte Verlauf des Entladestroms 68, wobei alle Kondensatoren 44 entladen werden.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine Induktivität elektrische Leistung aus einer eine Gleichspannung (16) abgebenden Leistungsquelle (8) bezieht,
- wobei jedes Submodul (22) eingangsseitig eine einphasige Halbbrücke (40) und lastseitig eine einphasige Vollbrücke (42) aufweist, und
- wobei die Halbbrücke (40) und die Vollbrücke (42) gleichspannungsseitig sowie parallel hierzu ein Zwischenkreiskondensator (44) geschaltet sind,
**gekennzeichnet durch**
- eine Entladeschaltung (62) zum Entladen der Kondensatoren (44) der Submodule (22), die parallel zu der Reihenschaltung geschaltet ist.

2. Stromrichterschaltung (4) nach Anspruch 1, **dadurch gekennzeichnet, dass** die Halbbrücke (40) jedes Submoduls (22) eine am Submodul (22) eingangsseitig parallel geschaltete Diode (52) umfasst, die in Richtung der Gleichspannung (16) aus der elektrischen Leistungsquelle (8) sperrt.

3. Stromrichterschaltung (4) nach Anspruch 1 oder 2, **dadurch gekennzeichnet, dass** die Halbbrücke (40) jedes Submoduls (22) einen steuerbaren Schalter (46) umfasst, der in Reihe zwischen der Diode und der Vollbrücke (42) geschaltet ist.

4. Stromrichterschaltung (4) nach einem der vorstehenden Ansprüche, **dadurch gekennzeichnet, dass** die Entladeschaltung (62) ein Entladeschaltelement (64) umfasst, das zum Kurzschließen der Reihenschaltung der Submodule (22) über die Entladeschaltung (62) vorgesehen ist.

5. Stromrichterschaltung (4) nach Anspruch 4, **dadurch gekennzeichnet, dass** die Entladeschaltung (62) eine in Reihe zum Entladeschaltelement (64) geschaltete Kurzschlusslast (66) umfasst.

6. Stromrichterschaltung (4) nach Anspruch 5, **dadurch gekennzeichnet, dass** die Kurzschlusslast (66) rein ohmsch ist.

7. Verfahren zum selektiven Entladen eines Zwischenkreiskondensators (44) in einem bestimmten Submodul (22) einer Stromrichterschaltung (4) nach einem vorstehenden Ansprüche **gekennzeichnet durch** die Schritte:
- Anlegen des Zwischenkreiskondensators (44) des bestimmten Submoduls (22) an einen Eingang (26,28) des bestimmten Submoduls über die Halbbrücke (40) des bestimmten Submoduls (22),
- Kurzschließen der Eingänge der verbleibenden Submodule (22) der Stromrichterschaltung (4) über die jeweiligen Halbbrücken der Submodule (22), und
- Entladen des Zwischenkreiskondensators (44) des bestimmten Submoduls (22) mit der Entladeschaltung (62) bis eine am Zwischenkreiskondensator (44) des bestimmten Submoduls (22) abfallende Spannung (60) eine bestimmte Entladespannungsschwelle unterschritten hat.

8. Verfahren nach Anspruch 7, **gekennzeichnet durch** den Schritt:
- Erfassen einer Fehlfunktion der Stromrichterschaltung (4) und
- Unterbrechen einer elektrischen Leistungszufuhr zur Stromrichterschaltung (4) nachdem die Fehlfunktion in der Stromrichterschaltung (4) erfasst ist.

9. Verfahren nach Anspruch 7 oder 8, **gekennzeichnet durch** die Schritte:
- Erfassen einer Fehlfunktion in einem Submodul (22) der Stromrichterschaltung (4), und
- Abschalten der Eingangsspannung (24) des Submoduls (22) mit der Fehlfunktion.

10. Verfahren nach Anspruch 9, **gekennzeichnet durch** den Schritt:
- Erfassen der Fehlfunktion im Submodul (22), wenn die Spannung (60) am Zwischenkreiskondensator (44) eine Überspannungsschwelle überschreitet.

11. Verfahren nach Anspruch 9 oder 10, **gekennzeichnet durch** den Schritt:
- Kurzschließen eines Eingangs (26,28) des Submoduls (22) aus der Stromrichterschaltung (4) zum Abschalten einer Eingangsspannung (24) des Submoduls (22).

12. Verfahren nach einem der Ansprüche 7 bis 11, **gekennzeichnet durch** den Schritt:
- Regeln eines Stromes (68) **durch** die Entladeschaltung (64) auf einen Sollwert mit dem Schalter (64) als Stellglied.

13. Verfahren nach Anspruch 12, wobei die Regelung eine Zweipunktregelung mit eingebauter Hysterese umfasst.

14. Steuervorrichtung (56) zur Durchführung eines Verfahrens nach einem der Ansprüche 7 bis 13.

15. Elektromotor für ein Fahrzeug umfassend mehrere Motorwicklungen und eine Stromrichterschaltung (4) nach einem der Ansprüche 1 bis 6 mit einer der Anzahl der Motorwicklungen (10) entsprechenden Anzahl ans Submodulen (22), wobei jedes Submodul (22) ausgangsseitig an eine Motorwicklung (10) angeschlossen ist.
